(19) Europäisches Patentamt
European Patent Office
Office européen des brevets

(11) Veröffentlichungsnummer: **0 054 219**
**B1**

(12) # EUROPÄISCHE PATENTSCHRIFT

(45) Veröffentlichungstag der Patentschrift: **26.02.86**

(51) Int. Cl.⁴: **C 08 G 18/20**, C 08 G 18/14

(21) Anmeldenummer: **81110036.1**

(22) Anmeldetag: **01.12.81**

(54) **Verfahren zur Herstellung von geschäumten Polyurethanen.**

(30) Priorität: **12.12.80 DE 3046905**

(43) Veröffentlichungstag der Anmeldung:
**23.06.82 Patentblatt 82/25**

(45) Bekanntmachung des Hinweises auf die Patenterteilung:
**26.02.86 Patentblatt 86/9**

(84) Benannte Vertragsstaaten:
**AT BE CH DE FR GB IT LI SE**

(56) Entgegenhaltungen:
**DE - A - 2 042 636**
**DE - A - 2 203 404**

**Saunders, J.H. u. K.C. Frisch, POLYURETHANES, Teil 1, S. 208, 211**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Haas, Peter, Dr., Zwengenberger Strasse 43, D-5657 Haan 1 (DE)**
Erfinder: **Freitag, Hans-Albrecht, Dr., Mülheimer Strasse 135, D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 054 219 B1**

LIBER. STOCKHOLM 1986

**Beschreibung**

Die Herstellung von Polyurethanen unter Verwendung von tertiäre Aminogruppen aufweisenden Katalysatoren ist bekannt. Obwohl hierdurch schon ein hoher Stand der Polyurethanverschäumungstechnik erreicht werden konnte, ist sie dennoch, wie die Praxis zeigt, verbesserungsfähig. In der Regel wird die Schaumstoffbindung durch eine Kombination verschiedener Katalysatoren aktiviert. Häufig wird eine Kombinationskatalyse mit Derivaten des Morpholins gewählt. Diese werden mit Vorteil bei der Bildung einer feinen, hautartigen Struktur der Oberfläche von Formschaumteilen und zur Verbesserung des Aushärteverhaltens der Formteile sowie zur Vermeidung von Schaumstörungen, die während es Verschäumprozesses auftreten können, eingesetzt.

Als Morpholinderivate wurden bislang hauptsächlich N-Methylmorpholin (NMM) sowie N-Ethylmorpholin (NEM) und neuerdings Dimethylaminoethylmorpholin (DMEM) eingesetzt. In der Praxis des Verschäumens zeigt sich nun, daß durch Verwendung von NMM, NEM als auch durch DMEM bei der Schaumherstellung und beim Entformen der mehr oder weniger erwärmten Formschaumteile noch immer unangenehme geruchliche Belästigungen auftreten.

Die geschilderte erwünschte Wirkung ließ bislang jedoch einen Verzicht auf diese Aktivatoren nicht zu. Aufgabe der vorliegenden Erfindung ist es nun, einen Aktivator zur Verfügung zu stellen, der die guten Eigenschaften der bisher technisch verwendeten Katalysatoren, speziell zur Hautbildung und zum Verschäumungsverhalten beibehält, jedoch die mit ihrem Einsatz einhergehende geruchliche Belästigung erheblich reduziert oder sogar ganz vermeidet.

Gegenstand der Erfindung ist ein Verfahren zur Herstellung von geschäumten Polyurethanen durch Umsetzung von mindestens zwei gegenüber Isocyanaten reaktionsfähige Wasserstoffatome aufweisenden Verbindungen vom Molekulargewicht 400—10 000 mit Polyisocyanaten in Gegenwart von tertiäre Aminogruppen aufweisenden Katalysatoren und gegebenenfalls in Gegenwart von Kettenverlängerungsmitteln vom Molekulargewicht 32—400, Schaumstabilisatoren, Wasser und/oder organischen Treibmitteln sowie gegebenenfalls weiteren Hilfs- und Zusatzmitteln, dadurch gekennzeichnet, daß man als Katalysatoren Morpholinderivate der allgemeinen Formel

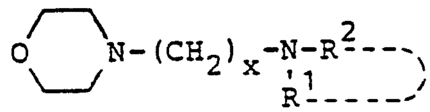

in der

$R^1$ und $R^2$ gleich oder verschieden sind und

a) einen $C_1$—$C_6$-alkyl- oder $C_6$—$C_{10}$-Cycloalkylrest oder

b) gemeinsam einen 5—7 C-Atome aufweisenden Alkylenrest, der durch Heteroatome substituiert sein kann, oder

c) gemeinsam einen Rest der Formel

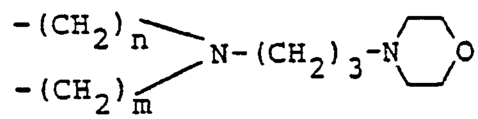

in dem n und m gleiche oder verschiedene ganze Zahlen von 2 bis 4, bevorzugt 2, darstellen,

d) 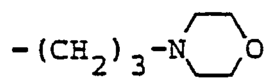

bedeuten und

x eine ganze Zahl zwischen 3 und 6 ist,

verwendet.

Erfindungsgemäß ist bevorzugt, daß man als Morpholinderivate die Verbindungen

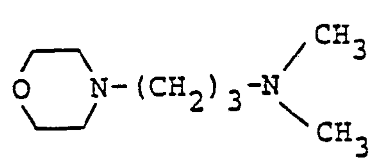

oder

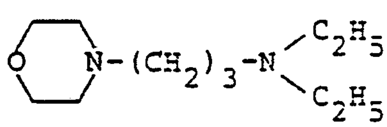

verwendet.

Überraschend hat sich herausgestellt, daß schon bei Änderung der Struktur des DMEM um nur eine Methylengruppe, mithin also zum Dimethylaminopropylmorpholin

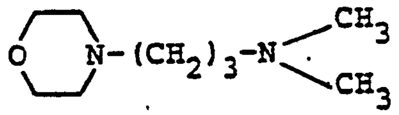

(DMPM)

eine Verbindung mit völlig veränderten Verarbeitungseigenschaften erhalten wird. Während die Katalyseeigenschaften bezüglich geforderter Haut- und Zellbildungseffekte bei kurzen Entformungszeiten überraschend gut sind, zeigt die Verwendung dieses Aktivators bei der Polyurethanherstellung einen außergewöhnlich großen Unterschied bezüglich des Geruchs im Vergleich zu NMM, NEM und auch zu DMEM. Schon die Reinsubstanzen von DMEM und DMPM zeigen in ihren geruchlichen Eigenschaften merkliche Unterschiede; während nämlich DMEM ähnlich dem Pyridin riecht, ist DMPM in der Tat als geruchsarm und als geruchlich nicht störend zu bezeichnen, eine Eigenschaft, die auch während des Verschäumens und auch beim Entformen eines hergestellten Polyurethan-Formteiles voll zur Geltung kommt.

Diese Tendenz wird bei erfindungsgemäß verwendeten höher alkylierten Derivaten des Aminopropylmorpholins und den mehrfach durch Morpholinopropylgruppen substituierten Aminen fortgesetzt.

Überraschend ist auch eine gute Gesamtreaktivität (Liege- und Steigzeiten) durch die erfindungsgemäße Katalyse, obwohl die Katalyseeigenschaften von Dimethylaminopropylmorpholin (DMPM) in einer Untersuchung zur Reaktionskinetik von Urethanreaktionen als höchst mittelmäßig eingestuft wurde (J. Burkus, J. Org. Chem. 26, 779 (1961).

Als Beispiele für die erfindungsgemäß zu verwendenden Aktivatoren seien angeführt:

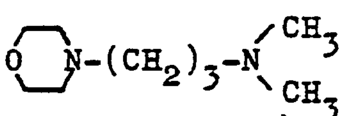

*)

(bevorzugt)

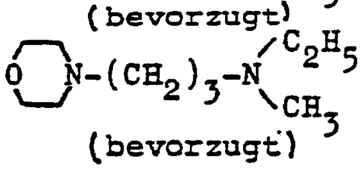

(bevorzugt)

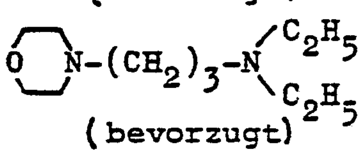

(bevorzugt)

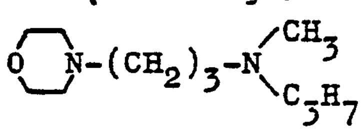

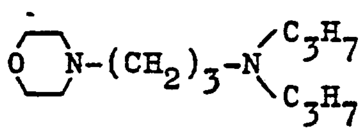

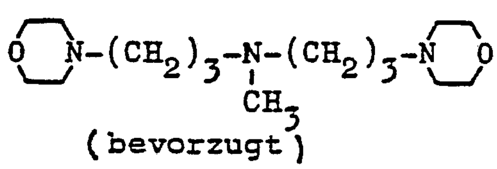

(bevorzugt)

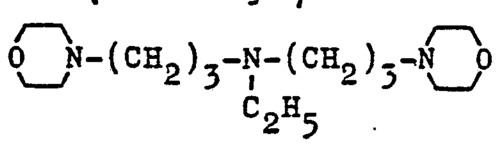

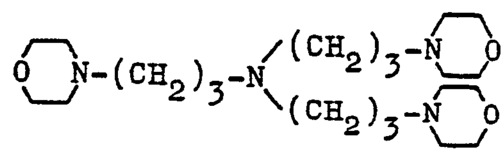

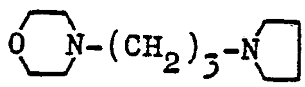

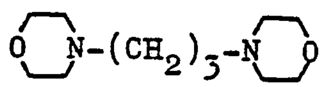

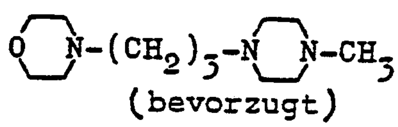

(bevorzugt)

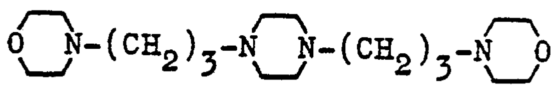

*) bekannt aus CA 55: 23303b

Bei den erfindungsgemäß verwendeten Verbindungen handelt es sich um wasserhelle Flüssigkeiten, deren geringer Eigengeruch nicht als unangenehm empfunden wird, welche, bezogen auf 100 Teile eines Reaktionsgemisches aus Polyisocyanaten und mindestens zwei gegenüber Isocyanaten rekationsfähige

Wasserstoffatome aufweisenden Verbindungen vom Molekulargewicht 400—10000, in einer Menge von 0,3 bis 5,0 Teilen, gegebenenfalls in Abmischungen untereinander, verwendet werden.

Ihre Herstellung erfolt in an sich bekannter Weise z.B. durch Leuckart-Wallach-Reaktion.

Erfindungsgemäß ist vielfach bevorzugt, neben den erfindungsgemäß einzusetzenden Morpholinderivaten auch die aus der Polyurethan-Chemie an sich bekannten Katalysatoren, z.B. solche, wie sie in der DE—OS 2 854 384 auf den Seiten 26—29 und 31—33 genannt werden, mitzuverwenden, und zwar in der Regel in einer Menge von 5—100 Gew.-%, bezogen auf die erfindungsgemäß einzusetzenden Morpholinderivate.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n = 2—4, vorzugsweise 2, und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen, oder
einen araliphatischen Kohlenwasserstoffrest mit 8—15, vorzugsweise 8—13 C-Atomen,

bedeuten, z.B. solche Polyisocyanate, wie sie in das DE—OS 2 832 253, Seiten 10—11 beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten rekationsfähigen Wasserstoffatomen von einem Molekulargewicht in der Regel von 400—10 000. Hierunter versteht man neben Aminogruppen, Thiolgruppen oder Carboxylgruppen aufweisenden Verbindungen vorzugsweise Hydroxylgruppen aufweisende Verbindugen, insbesondere zwei bis acht Hydroxylgruppen aufweisende Verbindungen, speziell solche vom Molekulargewicht 1000 bis 6000, vorzugsweise 2000 bis 4000, z.B. mindestens zwei, in der Regel 2 bis 8, vorzugsweise aber 2 bis 4, Hydroxylgruppen aufweisende Polyester, Polyether, Polythiolether, Polyacetale, Polycarbonate und Polyesteramide, wie sie für die Herstellung von homogenen und von zellförmigen Polyurethanen an sich bekannt sind und wie sie z.B. in der DE—OS 2 832 253, Seiten 11—18, beschrieben werden.

3. Gegebenenfalls als Ausgangskomponenten Verbindungen mit mindestens zwei gegenüber Isocyanaten rekationsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2.bis 8, vorzugsweise 2 bis 4, gegenüber Isocyanaten rekationsfähige Wasserstoffatome auf. Beispiele hierfür werden in der DE—AS 2 832 253, Seiten 19—20, beschrieben.

4. Gegebenenfalls Hilfs- und Zusatzmittel wie
   a) Wasser und/oder leicht flüchtige anorganische oder organische Substanzen als Treibmittel,
   b) Katalysatoren der an sich bekannten Art,
   c) Oberflächenaktive Zusatzstoffe, wie Emulgatoren und Schaumunstabilisatoren,
   d) Rekationsverzögerer, z.B. sauer reagierende Stoffe wie Salzsäure oder organische Säurehalogenide, ferner Zellregler der an sich bekannten Art wie Paraffine oder Fettalkohole oder dimethylpolysiloxane sowie Pigmente oder Farbstoffe und Flammschutzmittel der an sich bekannten Art, z.B. Tris-chlorethylphoshat, Trikresylphosphat oder Ammoniumphosphat und -polyphosphat, ferner Stabilisatoren genen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe wurden beispielsweise in der DE—OS 2 732 292, Seiten 21—24 beschrieben.

Weitere Beispiele von gegebenenfals erfindungsgemäßen mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung wird erfindungsgemäß die Verschäumung bevorzugt in geschlossenen Formen durchgeführt. Dabei wird das Rekationsgemisch in eine Form eingetragen. Als Formmaterial kommt Metall, z.B. Aluminium, oder Kunststoff, z.B. Epoxidharz, in Frage. In der Form schäumt das schäumfähige Rekationsgemisch auf und bildet den Formkörper. Die Formverschäumung kann, dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Rekationsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der bevorzugten Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß ist bevorzugt, in kalter Form geschäumte (kalthärtende Formschaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung: Automobilsitze, Armlehnen, Bauelemente, Matratzen, Kühlmöbel, Tiefkühlhausisolierungen, Dachisolierungen, Dämmplatten für die Bauindustrie, Bauplatten (Sandwich-Platten).

## Beispiele

A) *Dimethylaminopropylmorpholin*

In 7,4 kg (51,4 Mol) 3-Aminopropylmorpholin und 300 g Raney-Ni werden bei 110°C innerhalb von 6 Stunden 10300 ml methanolische Formaldehydlösung (100 ml entspr. 1 Mol) gedrückt und bei 140 bar innerhalb von 3 Stunden hydriert, abgesaugt, eingeengt und destilliert.

$Kp_{0,03}$: 60°C; Ausbeute 6550 g, entspr. 73% d. Th. Reinheit nach Gaschromatogramm: 98,3%; $n_D^{20}$: 1,4602. Die Verbindung ist durch einen schwachen, nicht unangenehmen Amingeruch gekennzeichnet.

B) *Bis-(morpholinopropyl)-methylamin*

Bei der Destillation des Rückstandes von A) wird weiter als höhersiedendes Amin von $Kp_{0,4}$ 160°C mit 400 g die Verbindung

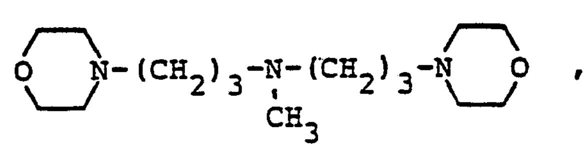

$C_{15}H_{31}N_3O_2$ (285) erhalten.

Molmasse gef. 290 (Titr.); die Struktur wurde weiterhin durch $^1H$—NMR gesichert; Reinheit nach Gaschromatogramm: 96,7%; das Amin ist geruchsarm.

C) *Diethylaminopropylmorpholin*

In 432 g (3 Mol) Aminopropylmorpholin und 60 g Raney-Ni werden bei 110°C innerhalb von 3 Stunden 264 g (6 Mol) Acetaldehyd gedrückt und bei 140 bar hydriert und destilliert; $Kp_{0,1}$: 60—62°C, 310 g entspr. 52% d. Th. Reinheit nach Gaschromatogramm: 95%, Molekulargewicht gef. 192, ber. für $C_{11}H_{24}N_2O$: 200. Die Verbindung its geruchsfrei.

D) *Bis-(morpholinopropyl)-ethylamin*

Bei der Destillation des Rückstandes von C) werden noch 95 g einer Substanz vom $Kp_{0,1}$ 140—144°C erhalten, wobei es sich um

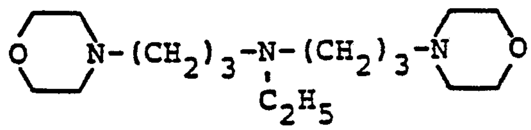

$C_{16}H_{33}N_3O_2$ (299) handelt.

Molmasse gef. 295, Reinheit nach Gaschromatogramm: 96%, die Struktur wird weiter durch $^1H$—NMR gesichert; die Verbindung ist geruchsfrei.

E) *Dipropylaminopropylmorpholin*

In 432 g (3 Mol) Aminopropylmorpholin und 60 g Raney-Ni werden bei 120°C 348 g (6 Mol) Propionaldehyd gepumpt und bei 140 bar hydriert.

$Kp_{0,03}$: 76°C, Reinheit nach Gaschromatogramm: 96,5%, Ausbeute 235 g; Molmasse gef. 220, Molekulargewicht ber. für $C_{13}H_{28}N_2O$: 228, die Verbindung ist geruchlos.

F) *Bis-(morpholinopropyl)-propylamin*

Bei der Destillation des Rückstandes von E) werden noch 80 g einer Substanz vom $Kp_{0,03}$ 155°C erhalten, wobei es sich um

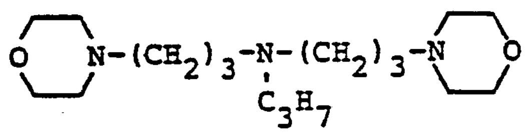

$C_{17}H_{35}N_3O_2$ (313) handelt.

Molmasse gef. 303, Reinheit nach Gaschromatogramm: 95,5%, die Struktur wird weiter durch $^1H$—NMR gesichert.

G) *Morpholinopropylpyrrolidin*

In 71 g (1 Mol) Pyrrolidin und 40 g Raney-Ni werden bei 120°C 143 g (1 Mol) 3-Morpholinopropionaldehyd in 143 g Dioxan zugepumpt und bei 160 bar hydriert; man saugt ab, engt ein und destilliert.

$Kp_{0,1}$: 82°C, Reinheit nach Gaschromatogramm: 94,5% Ausbeute: 51 g; Molmasse gef. 196, Mokekulgargewicht ber. für $C_{11}H_{22}N_2O$: 198.

H) *Tris-(morpholinopropyl)-amin*

In 72 g (0,5 Mol) Aminopropylmorpholin und 30 g Raney-Ni werden bei 120°C 143 g (1 Mol) 3-Morpholinopropionaldehyd in 143 g Dioxan zugepumpt und bei 180 bar hydriert.

$Kp_{0,08}$: 170°C, Reinheit nach Gaschromatogramm: 91%, Ausbeute 48 g. Molmasse gef. 387, Molekulargewicht ber. für $C_{21}H_{42}N_4O_3$: 398; die Struktur wird weiter durch $^1H$—NMR gesichert.

I) *N-Morpholinopropyl-N'-methyl-piperazin*

In 100 g (1 Mol) N-Methylpiperazin und 30 g Raney-Nickel werden bei 115°C sowie 140 bar Wasserstoff 143 g (1 Mol) Morpholino-propionaldehyd in 143 g Dioxan eingedrückt und 2 Stunden hydriert; es wird abgesaugt, eingeengt und destilliert.

$Kp_{0,05}$: 125°C, Ausbeute 70 g, Reinheit nach Gaschromatogramm: 97,9%, Molekulargewicht: 216 (gef.), ber. für $C_{12}H_{25}N_3O$ (227):

| | | |
|---|---|---|
| ber.: C: 64,4%, | H: 10,5%, | N: 18,5% |
| gef.: C: 68,7%, | H: 10,0%, | N: 18.1%. |

Die Struktur wird weiter durch $^1H$—NMR bestätigt.

| Beispiel 1 | | a | b | c | d |
|---|---|---|---|---|---|
| trifunktioneller Polyether mit OH-Zahl 28: | Gew.-Tle | 100 | 100 | 100 | 100 |
| Wasser: | „ | 3,2 | 3,2 | 3,2 | 3,2 |
| Bis-dimethylaminodiethylether: | „ | 0,1 | 0,1 | 0,1 | 0,1 |
| Triethylendiamin: (33%ig in Dipropylenglykol) | „ | 0,4 | 0,4 | 0,4 | 0,4 |
| handelsüblicher Schaumstabilisator: | „ | 1,0 | 1,0 | 1,0 | 1,0 |
| DMPM (gemäß A): | „ | 0,7 | | | |
| NMM: | | | 0,7 | | |
| NEM: | „ | | | 0,9 | |
| DNEM: | „ | | | | 0,7 |
| handelsübliche Mischung aus TDI und rohem MDI (Isocyanatgehalt: 44,5%) (Kennzahl 100): | | 38,1 | 38,1 | 38,1 | 38,1 |
| Liegezeit (sec): | | 4 | 5 | 5 | 4 |
| Fadenziehzeit (sec): | | 47 | 57 | 50 | 46 |
| Steigzeit (sec): | | 75 | 87 | 82 | 80 |
| 10 l Kastenformteil Rohdichte (kg/m³): | | 36 | 34 | 34 | 35 |
| Stauchhärte (kPa) DIN 53577: | | 2,1 | 2,15 | 2,05 | 2,0 |
| Zugfestigkeit (kPa) DIN 53 571: | | 80 | 90 | 85 | 85 |
| Bruchdehnung (%) DIN 53 571: | | 150 | 160 | 150 | 145 |
| Druckverformungsrest DIN 53 572 (%): bei 90% Verformung | | 5,9 | 4,7 | 5,0 | 5,8 |

| Beispiel 2 | | a | b |
|---|---|---|---|
| trifunctioneller Polyether mit OH-Zahl 28: | Gew.-Tle. | 100 | 100 |
| Wasser: | „ | 3,1 | 3,1 |
| Triethylendiamin: (33%ig in Dipropylenglykol) | „ | 0,8 | 0,8 |
| handelsüblicher Schaumstabilisator: | „ | 1,0 | 1 0 |
| DMPM (gemäß A); | „ | 0,5 | |
| DMEM: | „ | | 0,5 |
| handelsübliche Mischung aus TDI und rohem MDI (Isocyanatgehalt: 44,5%) (Kennzahl 100): | | 37,1 | 37,1 |
| Liegezeit (sec): | | 6 | 5 |
| Fadenziehzeit (sec): | | 53 | 51 |
| Steigzeit (sec): | | 82 | 79 |
| 10 l Kastenformteil: Rohdichte ($kg/mm^3$): | | 35 | 35 |
| Stauchhärte (kPa) DIN 53577: | | 1,97 | 2,04 |
| Zugfestigkeit (kPa) DIN 53571: | | 80 | 70 |
| Bruchdehnung (%) DIN 53571: | | 145 | 135 |
| Druckverformungsrest DIN 53572 (%): bei 90% Verformung | | 6,0 | 6,3 |

| Beispiel 3 | | a | b |
|---|---|---|---|
| trifunctioneller Polyether mit OH-Zahl 28: | Gew.-Tle. | 100 | 100 |
| Wasser: | „ | 3,2 | 3,2 |
| Bis-dimethylaminoethyl-ether: | „ | 0,2 | 0,2 |
| handelsüblicher Schaumstabilisator: | „ | 1,0 | 1,0 |
| DMPM (gemäß A); | „ | 1,0 | |
| DMEM | „ | | 1,0 |
| handelsübliche Mischung aus TDI und rohem MDI (Isocyanatgehalt: 44,5%) (Kennzahl 100): | | 38,1 | 38,1 |
| Liegezeit (sec): | | 5 | 5 |
| Fadenziehzeit (sec): | | 55 | 53 |
| Steigzeit (sec): | | 65 | 69 |
| 10 l Kastenformteile: Rohdichte ($kg/mm^3$): | | 35 | 35 |
| Stauchhärte (kPa) DIN 53577: | | 1,92 | 2,04 |
| Zugfestigkeit (kPa) DIN 53571: | | 80 | 85 |
| Bruchdehnung (%) DIN 53571: | | 150 | 160 |
| Druckverformungsrest DIN 53572 (%): bei 90% Verformung | | 7,0 | 6,0 |

| Beispiel 4 | | a | b |
|---|---|---|---|
| trifunctioneller Polyether mit OH-Zahl 28: | Gew.-Tle. | 100 | 100 |
| Wasser: | " | 3,2 | 3,2 |
| Bis-dimethylaminoethyl-ether: | " | 0,1 | 0,1 |
| Triethylendiamin: (33%ig in Dipropylenglykol) | " | 0,4 | 0,4 |
| handelsüblicher Schaumstabilisator: | " | 1,0 | 1,0 |
| DMPM (gemäß A); | " | 0,7 | |
| DMEM: | " | | 0,7 |
| handelsübliches, modifiziertes TDI (Isocyanatgehalt 39,5%) (Kennzahl 100): | | 43,0 | 43,0 |
| Liegezeit (sec): | | 5 | 5 |
| Fadenziehzeit (sec): | | 47 | 42 |
| Steigzeit (sec): | | 77 | 71 |
| 10 l Kastenformteile: Rohdichte ($kg/mm^3$): | | 33 | 34 |
| Stauchhärte (kPa) DIN 53577: | | 1,67 | 1,66 |
| Zugfestigkeit (kPa) DIN 53571: | | 65 | 75 |
| Bruchdehnung (%) DIN 53571: | | 135 | 140 |
| Druckverformungsrest DIN 53572 (%): bei 90% Verformung | | klebt | klebt |

| Beispiel 5 | | a | b | c |
|---|---|---|---|---|
| trifunctioneller Polyester mit OH-Zahl 28: | Gew.-Tle. | 100 | 100 | 100 |
| Wasser: | " | 3,2 | 3,2 | 3,2 |
| Bis-dimethylaminoethyl-ether: | " | 0,1 | 0,1 | 0,1 |
| Triethylendiamin: (33%ig in Dipropylenglykol) | " | 0,4 | 0,4 | 0,4 |
| handelsüblicher Schaumstabilisator: | " | 1,0 | 1,0 | 1,0 |
| Methyl-bis-(morpholino-propyl)amin (gemäß B): | " | 1,5 | | |
| N-Diethylaminopropylmorpholin (gemäß C): | " | | 1,0 | |
| N-Methylmorpholin: | | | | 0,7 |
| handelsübliche Mischung aus TDI und rohem MDI (Isocyanatgehalt: 44,5%) (Kennzahl 100): | | 38,1 | 38,1 | 38,1 |
| Liegezeit (sec) | | 5 | 6 | 5 |
| Fadenziehzeit (sec): | | 63 | 58 | 57 |
| Steigzeit (sec): | | 95 | 98 | 87 |
| 10 l Kastenformteile: Rohdichte (kg/m$^3$): | | 35 | 37 | 34 |
| Strauchhärte (kPa) DIN 53577: | | 1,95 | 2,03 | 2,15 |
| Zugfestigkeit (kPa) DIN 53571: | | 80 | 110 | 90 |
| Bruchdehnung (%) DIN 53571: | | 150 | 160 | 160 |
| Druckverformungsrest (%) DIN 53572: bei 90% Verformung | | 6,1 | 7,0 | 4,7 |

Die vorstehenden Verarbeitungsbeispiele basieren auf der Umsetzung handelsüblicher Isocyanate mit handelsüblichen trifunktionellen Polyethern, die durch Addition von Propylenoxid und Ethylenoxid an Trimethylolpropan hergestellt wurden. Es kamen ca. 45°C heiße Aluminium-Kastenformen zur Verwendung.

Würdigung der Beispiele:

Beispiel 1

DMPM (gemäß A) ergibt in Cokatalyse mit Bis-dimethylaminoethyl-ether und Triethylendiamin (33%ig in Dipropylenglykol) gleichartiges Verschäumverhalten und vergleichbare Schaumstoffe wie die gebräuchlichen Morpholinderivate NMM, NEM und DMEM. Die geruchliche Belästigung beim Verschäumen, Entformen und Aufdrücken der Formteile ist bei Verwendung von DMPM im Vergleich zu NMM, NEM aber auch noch DMEM deutlich reduziert.

Beispiel 2

Wird Triethylendiamin (33%ig in Dipropylenglykol) allein als Kombinations-Katalysator eingesetzt, ergibt sich bei Verwendung von DMPM (gemäß A) im Vergleich zu DMEM eine deutliche Verminderung des Geruchs während des Verschäumprozesses und beim Aufdrücken der Formteile.

Beispiel 3

Wird Bis-dimethylaminoethyl-ether allein als Kombinations-katalysator eingesetzt, ergibt sich bei Verwendung von DMPM (gemäß A) im Vergleich zu DMEM eine deutliche Verminderung des Geruches während des Verschäumprozesses und beim Aufdrücken der Formteile.

Beispiel 4

Wird in Abänderung von Beispiel 1 ein anderes Isocyanat eingesetzt, ergibt sich bei Verwendung von

DMPM (gemäß A) im Vergleich zu DMEM eine deutliche Verminderung des Geruches während des Verschäumprozesses und beim Aufdrücken der Formteile.

Beispiel 5

In Ergänzung zu Beispiel 1 wird gezeigt, daß N-Aminopropylmorpholin-Derivate mit höherem Molekulargewicht als DMPM, nämlich z.B. N-Diethylaminopropylmorpholin gemäß C) und Methyl-bis-(morpholino-propyl)amin gemäß B), zur Erzielung ähnlicher Verschäumzeiten in höherer Konzentration eingesetzt werden müssen. Dennoch bleibt der Vorteil bezüglich der Geruchsbelästigung bestehen.

**Patentansprüche**

1. Verfahren zur Herstellung von geschäumten Polyurethanen durch Umsetzung von mindestens zwei gegenüber Isocyanaten reaktionsfähige Wasserstoffatome aufweisenden Verbindungen vom Molekulargewicht 400—10 000 mit Polyisocyanaten in Gegenwart von tertiäre Aminogruppen aufweisenden Katalysatoren und gegebenenfalls in Gegenwart von Kettenverlängerungsmitteln vom Molekulargewicht 32—400, Schaumstabilisatoren, Wasser und/oder organischen Treibmitteln sowie gegebenenfalls weiteren Hilfs- und Zusatzmitteln, dadurch gekennzeichnet, daß man als Katalysatoren Morpholinderivate der allgemeinen Formel

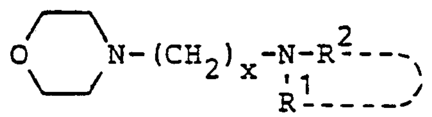

in der

$R^1$ und $R^2$ gleich oder verschieden sind und

a) einen $C_1$—$C_6$-alkyl- oder $C_6$—$C_{10}$-Cycloalkylrest oder

b) gemeinsam einen 5—7 C-Atome aufweisenden Alkylenrest, der durch Heteroatome substituiert sein kann, oder

c) gemeinsam einen Rest der Formel

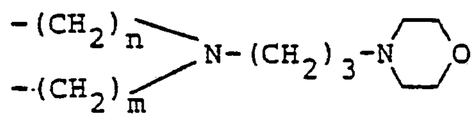

in dem n und m gleiche oder verschiedene ganze Zahlen von 2 bis 4, bevorzugt 2, darstellen, oder

d)

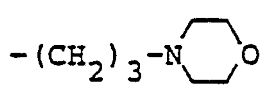

bedeuten und

x eine ganze Zahl zwischen 3 und 6 ist,

verwendet.

2. Verfahren gemäß Anspruch 1, dadurch gekennzeichnet, daß man als Morpholinderivat die Verbindung

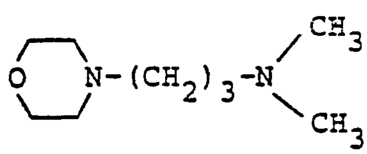

verwendet.

3. Verfahren gemäß Anspruch 1, dadurch gekennzeichnet, daß man als Morpholinderivat die Verbindung

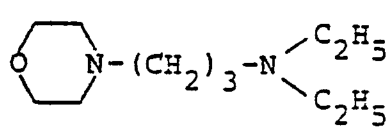

verwendet.

4. Verfahren gemäß Anspruch 1—3, dadurch gekennzeichnet, daß formgeschäumte Polyurethane hergestellt werden.

5. Verfahren gemäß Anspruch 1—4, dadurch gekennzeichnet, daß in kalter Form geschäumte Polyurethane hergestellt werden.

6. Verfahren gemäß Anspruch 1—5, dadurch gekennzeichnet, daß neben den Morpholinderivaten weitere, aus der Polyurethan-Chemie an sich bekannte Katalysatoren mitverwendet werden.

## Revendications

1. Procédé de fabrication de polyuréthanes mousseux par réaction de composés présentant au moins deux atomes d'hydrogène réactifs envers les isocyanates, ayant un poids moléculaire de 400 à 10 000, avec des polyisocyanates en présence de catalyseurs présentant des groupes amino tertiaires et éventuellement en présence d'agents d'allongement de chaîne d'un poids moléculaire de 32 à 400, de stabilisateurs de mousse, d'eau et/ou d'agents expanseurs organiques de même qu'éventuellement d'autres auxiliaires et additifs, caractérisé en ce qu'on utilise comme catalyseurs des dérivés de morpholine de formule générale:

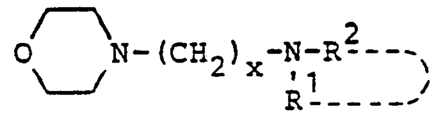

dans laquelle

$R^1$ et $R^2$ sont identiques ou différents et représentent

a) un radical alcoyle en $C_1$—$C_6$ ou cycloalcoyle en $C_6$—$C_{10}$ ou

b) forment ensemble un radical alcoylène présentant 5 à 7 atomes de carbone qui peut être substitué par des hétéroatomes, ou

c) forment ensemble un radical de formule:

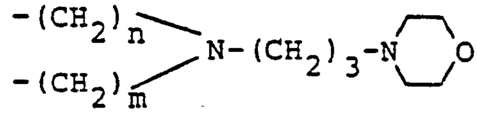

dans laquelle n et m sont des nombres entiers identiques ou différents de 2 à 4, de préférence 2, ou signifient

d)

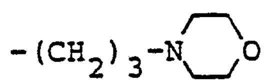

x un nombre entier entre 3 et 6.

2. Procédé selon la revendication 1, caractérisé en ce qu'on utilise comme dérivé de morpholine le composé

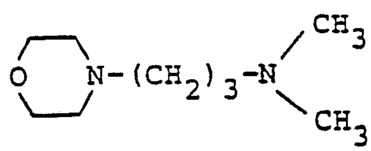

3. Procédé selon la revendication 1, caractérisé en ce qu'on utilise comme dérivé de morpholine le composé

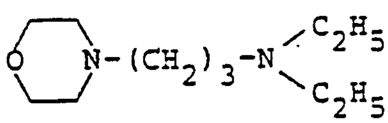

4. Procédé selon les revendications 1 à 3, caractérisé en ce qu'on prépare des polyuréthanes qui ont été rendus mousseux dans un moule.

5. Procédé selon les revendications 1 à 4, caractérisé en ce qu'on prépare des polyuréthanes qui ont été rendus mousseux en moule froid.

6. Procédé selon les revendications 1 à 5, caractérisé en ce qu'on utilise conjointement, à côté des dérivés de morpholine, d'autres catalyseurs connus en eux-mêmes par la chimie des polyuréthanes.

## Claims

1. Process for the production of foamed polyurethanes by reacting compounds, with a molecular weight of from 400 to 10 000 and having at least two isocyanate-reactive hydrogen atoms, with polyisocyanates in the presence of catalysts having tertiary amino groups and optionally in the presence of chain-lengthening agents with a molecular weight of from 32 to 400, foam stabilizers, water and/or organic blowing agents as well as optionally further auxiliaries and additives, characterised in that the catalysts used are morpholine derivatives of the general formula

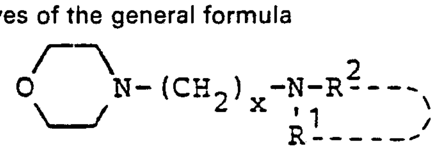

wherein

$R^1$ and $R^2$ are the same or different and

a) represent a $C_1$—$C_6$-alkyl or $C_6$—$C_{10}$-cycloalkyl radical or

b) together represent an alkylene radical having from 5 to 7 carbon atoms, which can be substituted by hetero atoms, or

c) together represent a radical of the formula

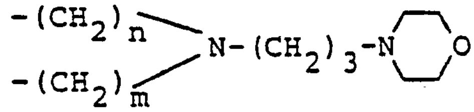

wherein n and m represent the same or different integers of from 2 to 4, preferably 2, or

d) represent

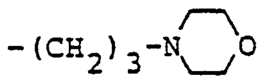

and

x is an integer of from 3 to 6.

2. Process according to claim 1, characterised in that the compound

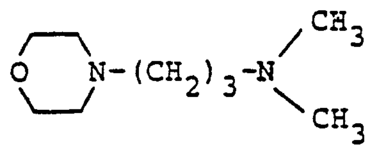

is used as morpholine derivative.

3. Process according to claim 1, characterised in that the compound

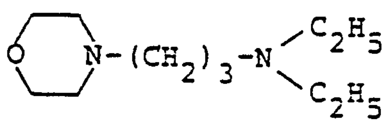

is used as morpholine derivative.

4. Process according to claim 1 to 3, characterised in that polyurethanes foamed in the mould are produced.

5. Process according to claim 1 to 4, characterised in that polyurethanes foamed in a cold mould are produced.

6. Process according to claim 1 to 5, characterised in that, in addition to the morpholine derivatives, other catalysts known *per se* in polyurethane chemistry are simultaneously used.